# DEMANDE DE BREVET EUROPEEN

(11) **EP 1 936 171 A1**
(43) Date de publication de la demande: **25.06.2008**
(21) Numéro de dépôt: 07301473.0
(22) Date de dépôt: 17.10.2007
(51) Int. Cl.: F02F 1/42, F01L 3/06, F02B 31/04

(54) **Culasse comprenant des conduits d'admission pourvus d'anneaux générateurs de tourbillons**

(30) Priorité: 18.12.2006 FR 0611019
(71) Demandeur: Renault SAS, 92100 Boulogne Billancourt (FR)
(72) Inventeur: Zawisza, Waldemar, 75014 Paris (FR); Mamy, Laurence, 92500 Rueil (FR); Anthoine, Pierre, 92500 Rueil (FR)

(57) **Abrégé**

L'invention concerne une culasse (20) de moteur à combustion interne comportant un socle (20A) qui forme au moins une tête de cylindre (29) et qui est percé d'au moins un conduit d'admission (21) débouchant au niveau de ladite tête de cylindre, un siège de soupape (31) inséré dans ledit socle au niveau du débouché de chaque conduit d'admission, et un anneau (40) générateur de tourbillons verticaux, coincé entre ledit socle et ledit siège de soupape, qui comporte un corps délimitant une ouverture présentant un bord périphérique, et un élément déflecteur (42) de gaz d'admission s'étendant à partir d'une partie seulement du bord périphérique de ladite ouverture.
Selon l'invention, ledit élément déflecteur s'étend en dehors du plan de ladite ouverture.

## Description

La présente invention concerne de manière générale le remplissage en gaz des moteurs à combustion interne.

Elle concerne plus particulièrement une culasse de moteur à combustion interne comportant :
- un socle qui forme au moins une tête de cylindre et qui est percé d'au moins un conduit d'admission débouchant au niveau de ladite tête de cylindre,
- un siège de soupape inséré dans le socle au niveau du débouché de chaque conduit d'admission, et
- un anneau générateur de tourbillons verticaux, coincé entre ledit socle et ledit siège de soupape, qui comporte un corps délimitant une ouverture présentant un bord périphérique, et un élément déflecteur de gaz d'admission s'étendant à partir d'une partie seulement du bord périphérique de ladite ouverture.

Elle concerne également un moteur à combustion interne comportant un bloc-cylindres pourvu d'au moins un cylindre, un carter d'huile raccordé sous le bloc-cylindres, une telle culasse et un couvre-culasse.

### ARRIERE-PLAN TECHNOLOGIQUE

Classiquement, l'admission en gaz d'admission d'un cylindre d'un moteur à combustion interne se fait via un ou plusieurs conduits d'admission percés dans la culasse du moteur. Pour réguler le débit de gaz d'admission, chaque conduit d'admission comporte une soupape d'admission qui ouvre et ferme cycliquement ce conduit. En position fermée, la soupape d'admission repose sur un siège de soupape disposé à la jonction du conduit d'admission et du cylindre.

La géométrie intérieure du conduit d'admission d'air revêt une importance primordiale dans le remplissage en air des cylindres. Cette géométrie influence en effet non seulement le débit d'air frais circulant dans le conduit d'admission d'air, c'est-à-dire sa perméabilité, mais aussi l'importance des mouvements tourbillonnaires dans la chambre de combustion tels que les tourbillons d'axe perpendiculaire à l'axe des cylindres communément appelés mouvements de tumble.

Ces mouvements de tumble influencent le bon fonctionnement des moteurs à allumage commandé dans la mesure où ils améliorent la dilution du carburant dans les gaz d'admission au sein de la chambre de combustion.

Afin de générer de tels mouvements tourbillonnaires, on connaît déjà du document JP 63131824 un moteur à combustion interne qui comporte, disposé en sandwich entre la culasse du moteur et le siège de soupape de chaque conduit d'admission, un anneau circulaire plat. Le bord périphérique de l'ouverture de cet anneau comporte une excroissance s'étendant vers le centre de l'ouverture, dans le plan de celle-ci, afin, d'une part, de dévier les gaz d'admission pour provoquer un mouvement de tumble dans le cylindre correspondant du moteur, et, d'autre part, de venir au contact de la soupape d'admission afin de la caler pour l'empêcher de pivoter.

L'inconvénient principal d'un tel anneau est que son excroissance réduit considérablement la section du conduit d'admission, ce qui est néfaste vis-à-vis de la perméabilité de ce conduit, et induit sur les gaz d'admission de fortes pertes de charge, ce qui est néfaste vis-à-vis des performances du moteur.

### OBJET DE L'INVENTION

Afin de remédier aux inconvénients précités de l'état de la technique, la présente invention propose une culasse telle que définie dans l'introduction, dans laquelle ledit élément déflecteur s'étend en dehors du plan de ladite ouverture.

Ainsi, grâce à l'invention, la surface utile de l'élément déflecteur de l'anneau est disposée hors du plan de l'ouverture de manière à ne pratiquement pas réduire la section du conduit d'admission correspondant. Cette disposition permet en outre à l'élément déflecteur de présenter une forme aérodynamique permettant de réduire les pertes de charges qu'il induit sur les gaz d'admission.

Selon une première caractéristique avantageuse de l'invention, ledit élément déflecteur est réalisé dans un matériau élastiquement déformable et comporte un bord libre qui s'applique tangentiellement contre une face intérieure du conduit d'admission.

Les culasses de moteurs à combustion interne sont généralement réalisées par moulage d'aluminium à l'aide de noyaux en sable. Il arrive que la forme et la position des conduits d'admission de la culasse ne correspondent pas exactement aux forme et position initialement désirées. Or, les forme et position des débouchés des conduits d'admission dans les cylindres revêtent une importance primordiale pour le remplissage des cylindres du moteur puisqu'elles déterminent les caractéristiques de l'écoulement des gaz d'admission, et en particulier l'amplitude des mouvements de tumble.

Ainsi, l'élasticité de l'élément déflecteur lui permet de s'appliquer contre la face intérieure du conduit d'admission afin d'effacer les éventuelles imperfections que ce conduit présente. La perméabilité du conduit d'admission et sa « robustesse » sont alors accrues.

D'autres caractéristiques avantageuses et non limitatives de la culasse selon l'invention sont les suivantes :
- ledit élément déflecteur présente une face concave tournée vers l'intérieur du conduit d'admission ;
- le diamètre de ladite ouverture est égal au diamètre intérieur dudit siège de soupape ;
- chaque conduit d'admission étant courbe, ledit élément déflecteur est disposé par rapport au socle du côté intérieur de la courbure du conduit d'admission ;
- ledit corps et ledit élément déflecteur de chaque anneau sont réalisés d'une seule pièce par emboutissage d'une plaque métallique ; et
- ledit corps et ledit élément déflecteur de chaque anneau sont réalisés d'une seule pièce par moulage d'une matière plastique.

Selon une autre caractéristique avantageuse de la culasse conforme à l'invention, le socle est percé de deux conduits d'admission qui présentent des géométries différentes et auxquels sont associés deux anneaux dont les éléments déflecteurs présentent des géométries différentes.

Il n'est généralement pas possible de réaliser des conduits d'admission de formes identiques pour alimenter en gaz d'admission chaque cylindre du moteur. Par conséquent, l'écoulement des gaz d'admission diffère légèrement d'un conduit d'admission à l'autre, ce qui a pour conséquence de modifier les performances de chaque cylindre du moteur.

Utiliser des anneaux de géométries différentes permet d'uniformiser le remplissage de chaque cylindre du moteur afin d'égaliser leurs performances.

L'invention concerne également un moteur à combustion interne tel que défini en introduction, comportant une telle culasse qui est raccordée au-dessus du bloc-cylindres et qui est couverte par le couvre-culasse.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue d'ensemble en coupe longitudinale d'un moteur à combustion interne selon l'invention ;
- la figure 2 est une vue de détail de la zone II de la figure 1 ; et
- la figure 3 est une vue de dessus d'un anneau selon l'invention.

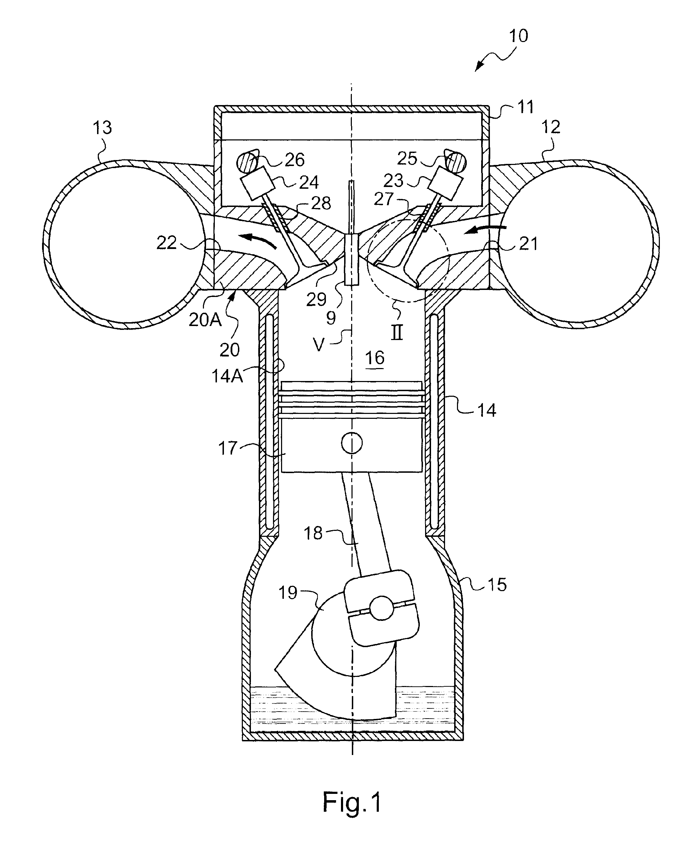

Sur la figure 1, on a représenté schématiquement une section d'un bloc moteur d'un moteur à combustion interne 10, ici à allumage commandé. Ce bloc moteur comporte un bloc-cylindres 14 pourvu de cylindres 14A en lignes d'axes V verticaux, par exemple au nombre de quatre, dont un seul d'entre eux est ici représenté.

Ce bloc-cylindres 14 est raccordé, sur sa partie inférieure, à un carter d'huile 15 renfermant de l'huile destinée à lubrifier les différents organes du moteur, et, sur sa partie supérieure, à une culasse 20 elle-même recouverte d'un couvre-culasse 11.

Classiquement, le cylindre 14A loge un piston 17 qui est adapté à coulisser le long de sa paroi interne selon un mouvement rectiligne alternatif d'axe confondu avec l'axe V du cylindre 14A.

Le piston 17 présente une jupe périphérique qui est percée transversalement de deux ouvertures d'accueil d'un axe lié à une extrémité d'une bielle 18. L'autre extrémité de cette bielle 18 est liée, par l'intermédiaire d'une liaison excentrique, à un vilebrequin 19. Ainsi, le mouvement rectiligne alternatif du piston 17 permet d'entraîner en rotation le vilebrequin 19 du moteur à combustion interne 10.

La culasse 20 du moteur à combustion interne 10 présente un socle 20A globalement parallélépipédique. Plus précisément, le socle 20A de la culasse 20 comporte une face inférieure tournée vers le bloc-cylindres 14, présentant quatre renflements intérieurs qui forment quatre têtes de cylindre 29 destinées à fermer les extrémités supérieures des quatre cylindres 14A du bloc-cylindres 14. Ces têtes de cylindre 29 présentent ici chacune une forme de cône dont le sommet pointe en direction du couvre-culasse 11.

Les cylindres 14A délimitent ainsi, avec les têtes de cylindre 29 et les pistons 17 qui leurs sont associés, une chambre de combustion 16.

Une bougie d'allumage 9 est agencée au sommet de chaque tête de cylindre 29 et débouche à l'intérieur du cylindre 14A associé.

Pour l'admission en gaz d'admission et en carburant de chaque cylindre 14A, la culasse 20 est percée de deux conduits d'admission 21 par cylindre qui prennent naissance dans un répartiteur d'air 12 et qui débouchent au niveau de la tête de cylindre 29 du cylindre 14A correspondant. Le carburant est ici classiquement injecté dans les gaz d'admission au moyen d'injecteurs ad hoc (non représentés) qui débouchent dans ces conduits d'admission 21.

Pour l'échappement de gaz brûlés en dehors de chaque cylindre 14A, la culasse 20 est en outre percée de deux conduits d'échappement 22 par cylindre qui prennent naissance sur la tête de cylindre 29 du cylindre 14A correspondant et qui débouchent dans un collecteur d'échappement 13.

Les débouchés des conduits d'admission 21 et d'échappement 22 sont régulièrement répartis sur la surface conique de chaque tête de cylindre 29.

Ces conduits d'admission 21 et d'échappement 22 sont adaptés à être obturés respectivement par des soupapes d'admission 23 et des soupapes d'échappement 24 qui régulent le débit d'arrivée de gaz d'admission ou de sortie de gaz brûlés dans chaque cylindre 14A du bloc-cylindres 14 du moteur à combustion interne 10.

Ces soupapes d'admission 23 et d'échappement 24 sont adaptées à coulisser dans des paliers lisses 27, 28 de la culasse 20 et sont commandées en position par des arbres à cames 25, 26 qui sont disposés dans la culasse 20 et qui sont liés en rotation au vilebrequin 19.

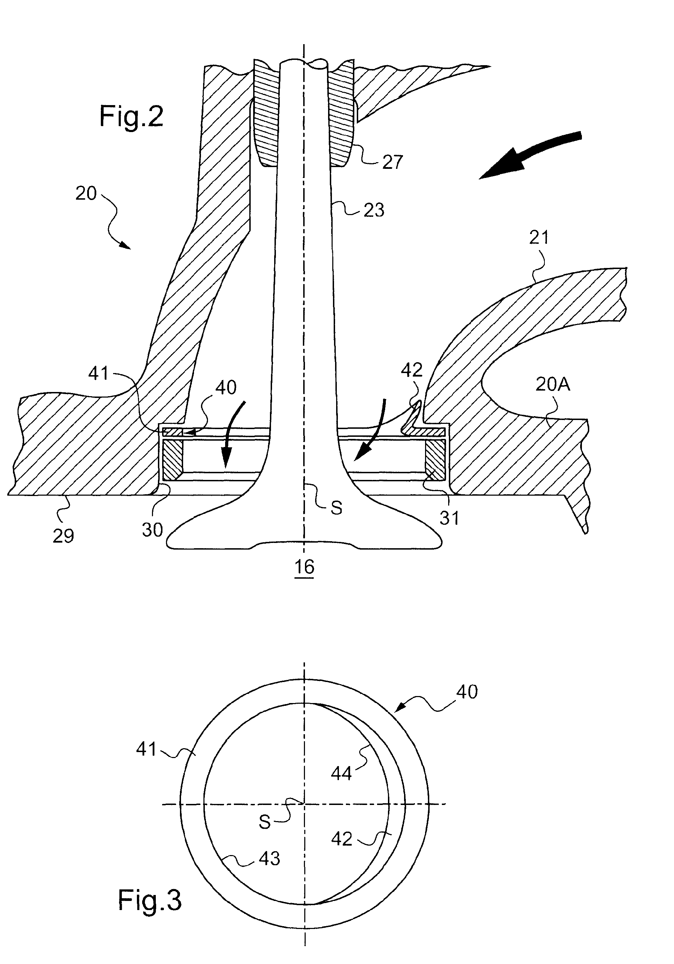

Comme l'illustre plus particulièrement la vue de détail de la figure 2, le débouché de chaque conduit d'admission 21 dans la chambre de combustion 16 comporte une section 30 de plus grand diamètre que celui du conduit d'admission 21. Cette section 30 loge un siège de soupape 31.

Ce siège de soupape 31 présente une forme d'anneau d'axe S dont la face latérale externe est ajustée en force dans ladite section 30 du conduit d'admission 21 pour l'y maintenir. L'arête basse de la face latérale interne de ce siège de soupape 31 est chanfreinée de manière à accueillir une partie évasée de la soupape d'admission 23 lorsque cette dernière obture le conduit d'admission 21. Pour ouvrir un passage pour les gaz d'admission, cette partie évasée de la soupape est adaptée à s'écarter de son siège de soupape.

Le diamètre intérieur du siège de soupape 31 est sensiblement égal au diamètre intérieur du conduit d'admission 21 de manière que le siège de soupape ne réduit absolument pas la section du conduit d'admission 21.

Comme le montrent les figures 2 et 3, la culasse 20 accueille en outre, dans chacun de ses conduits d'admission 21, une anneau 40 générateur de mouvements tourbillonnaires d'axes orthogonaux à l'axe V du cylindre 14A, appelés mouvements de tumble.

Cet anneau 40 comporte un corps 41 de forme annulaire autour de l'axe S qui présente une faible épaisseur et un diamètre extérieur sensiblement égal ou légèrement inférieur au diamètre extérieur du siège de soupape 31. Ce corps 41 est coincé entre le socle 20A de la culasse 20 et le siège de soupape 31.

Le corps 41 de l'anneau 40 comporte une ouverture 43 globalement circulaire dont le diamètre est sensiblement égal au diamètre intérieur du siège de soupape 31. Cette ouverture 43 est partiellement bordée d'un élément déflecteur 42 de gaz d'admission formé par une excroissance du corps 41.

Selon une caractéristique particulièrement avantageuse de l'invention, l'élément déflecteur 42 s'étend en dehors du plan de l'ouverture 43 dudit anneau 40.

A cet effet, une partie 44 du bord périphérique de l'ouverture 43, s'étendant sur un secteur angulaire ici environ égal à 180 degrés, présente une forme elliptique (non parfaitement circulaire), induisant un léger rétrécissement de section de l'ouverture 43.

L'élément déflecteur 42 s'étend en saillie de la face supérieure de l'anneau 40 à partir de cette partie 44 du bord périphérique de l'ouverture 43, en formant un retour au-dessus du corps 41 de l'anneau 40. Ce retour présente une hauteur conçue pour que le bord libre de l'élément déflecteur 42 soit circonscrit à un cylindre d'axe S de diamètre égal au diamètre extérieur du siège de soupape 31.

Préférentiellement, le corps 41 et l'élément déflecteur 42 de l'anneau 40 sont réalisés d'une seule pièce par emboutissage d'une plaque métallique. En variante, ils peuvent être réalisés d'une seule pièce par moulage, par exemple d'une matière plastique résistante à la chaleur.

Quoi qu'il en soit, le matériau de l'anneau 40 confère à l'élément déflecteur 42 une certaine élasticité.

Ainsi, lorsque l'anneau 40 est inséré dans la section 30 élargie du conduit d'admission 21, le bord libre de son élément déflecteur 42 s'applique parfaitement contre la face intérieure du conduit d'admission 21, dans la continuité de celui-ci, tangentiellement à lui.

Par conséquent, l'élément déflecteur 42 induit peu de pertes de charge sur le flux de gaz d'admission.

Avantageusement, l'élément déflecteur 42 présente une face concave tournée vers l'intérieur du conduit d'admission 21, de manière que cet élément déflecteur 42 forme un tremplin pour le flux de gaz d'admission, qui est ainsi dévié de sa trajectoire lorsqu'il impacte l'élément déflecteur.

Le conduit d'admission 21 étant courbe, l'élément déflecteur 42 de l'anneau 40 est disposé dans ladite section 30 élargie, du côté intérieur de la courbure du conduit d'admission 21. Il est donc disposé du côté de la partie basse de la tête de cylindre 29, à l'opposé du sommet de celle-ci.

De cette manière, la partie périphérique du flux de gaz d'admission qui circule du côté extérieur de la courbure du conduit d'admission 21 n'est pas gênée par l'anneau 40, tandis que la partie périphérique du flux de gaz d'admission qui circule du côté intérieur de la courbure du conduit d'admission 21 est renvoyée par l'élément déflecteur vers le sommet de la tête de cylindre 29.

De ce fait, le flux de gaz d'admission présente des mouvements de tumble qui influencent le bon fonctionnement du moteur dans la mesure où ils améliorent l'homogénéité des gaz d'admission et du carburant au sein de la chambre de combustion 16.

Préférentiellement, les anneaux 40 disposés dans les différents conduits d'admission 21 de la culasse 20 sont tous identiques.

En variante, les hauteurs et les secteurs angulaires sur lesquels s'étendent les éléments déflecteurs des anneaux de la culasse peuvent varier d'un anneau à l'autre. Ces hauteurs et secteurs angulaires peuvent en effet être conçus de manière que, malgré les différences de géométrie des différents conduits d'admission, le remplissage et les performances de chaque cylindre du moteur soient identiques.

Plus précisément, selon cette variante, les conduits d'admission qui induisent peu de pertes de charge sur le flux de gaz d'admission sont munis d'anneaux présentant des éléments déflecteurs de faible superficie. Au contraire, les conduits d'admission qui induisent de fortes pertes de charge sur le flux de gaz d'admission sont munis d'anneaux présentant des éléments déflecteurs de superficie importante qui améliorent efficacement le remplissage des cylindres correspondants.

La présente invention n'est nullement limitée aux modes de réalisation décrits et représentés, mais l'homme du métier saura y apporter toute variante conforme à son esprit.

## Revendications

1. Culasse (20) de moteur à combustion interne (10) comportant :
- un socle (20A) qui forme au moins une tête de cylindre (29) et qui est percé d'au moins un conduit d'admission (21) débouchant au niveau de ladite tête de cylindre (29),
- un siège de soupape (31) inséré dans ledit socle (20A) au niveau du débouché de chaque conduit d'admission (21), et
- un anneau (40) générateur de tourbillons verticaux, coincé entre ledit socle (20A) et ledit siège de soupape (31), qui comporte un corps (41) délimitant une ouverture (43) présentant un bord périphérique, et un élément déflecteur (42) de gaz d'admission s'étendant à partir d'une partie seulement du bord périphérique de ladite ouverture (43), et
**caractérisée en ce que** ledit élément déflecteur (42) s'étend en dehors du plan de ladite ouverture (43).

2. Culasse (20) selon la revendication précédente, dans laquelle ledit élément déflecteur (42) est réalisé dans un matériau élastiquement déformable et comporte un bord libre qui s'applique tangentiellement contre une face intérieure du conduit d'admission (21).

3. Culasse (20) selon l'une des revendications précédentes, dans laquelle ledit élément déflecteur (42) présente une face concave tournée vers l'intérieur du conduit d'admission (21).

4. Culasse (20) selon l'une des revendications précédentes, dans laquelle le diamètre de ladite ouverture (43) est égal au diamètre intérieur dudit siège de soupape (31).

5. Culasse (20) selon l'une des revendications précédentes, dans laquelle chaque conduit d'admission (21) étant courbe, ledit élément déflecteur (42) est disposé par rapport au socle (20A) du côté intérieur de la courbure du conduit d'admission (21).

6. Culasse (20) selon l'une des revendications précédentes dans laquelle le socle (20A) est percé de deux conduits d'admission (21) qui présentent des géométries différentes et auxquels sont associés deux anneaux (40) dont les éléments déflecteurs (42) présentent des géométries différentes.

7. Culasse (20) selon l'une des revendications précédentes, dans laquelle ledit corps (41) et ledit élément déflecteur (42) de chaque anneau (40) sont réalisés d'une seule pièce par emboutissage d'une plaque métallique.

8. Culasse (20) selon l'une des revendications 1 à 6, dans laquelle ledit corps (41) et ledit élément déflecteur (42) de chaque anneau (40) sont réalisés d'une seule pièce par moulage d'une matière plastique.

9. Moteur à combustion interne (10) comportant un bloc-cylindres (14) pourvu d'au moins un cylindre (14A), un carter d'huile (15) raccordé sous le bloc-cylindres (14) et un couvre-culasse (11), **caractérisé en ce qu'**il comporte une culasse (20) selon l'une des revendications précédentes qui est raccordée au-dessus du bloc-cylindres (14) et qui est couverte par le couvre-culasse (11).
